# FASCICULE DE BREVET EUROPEEN

(11) **EP 1 891 313 B1**
(45) Date de publication et mention de la délivrance du brevet: **21.07.2010**
(21) Numéro de dépôt: 06794469.4
(22) Date de dépôt: 29.05.2006
(51) Int. Cl.: F02D 23/00

(54) **PROCEDE DE COMMANDE D'UN MOTEUR A COMBUSTION INTERNE**
STEUERVERFAHREN FÜR EINEN VERBRENNUNGSMOTOR
INTERNAL COMBUSTION ENGINE CONTROL METHOD

(30) Priorité: 01.06.2005 FR 0505555; 09.09.2005 FR 0552722
(43) Date de publication de la demande: 27.02.2008
(73) Titulaire: Renault SAS, 92100 Boulogne Billancourt (FR)
(72) Inventeur: BUIS, Emmanuel, 92330 Sceaux (FR); ROUCH, Sébastien, 75013 Paris (FR)
(86) Numéro de dépôt international: PCT/FR2006/050491
(87) Numéro de publication internationale: WO 2007/000551

(56) Documents cités:
- EP-A- 1 178 192
- EP-A- 1 550 800
- US-A1- 2003 116 150
- US-B1- 6 298 718

## Description

L'invention concerne les systèmes de suralimentation associés à des moteurs à combustion interne dans des véhicules automobiles.

Les systèmes de suralimentation permettent d'augmenter la quantité d'air admis dans le moteur. Les systèmes de suralimentation comprennent un turbocompresseur formé d'une turbine et d'un compresseur couplé à la turbine. Une unité de commande électronique qui commande le fonctionnement général du moteur permet de commander le système de suralimentation.

La turbine est disposée à la sortie du collecteur d'échappement et est entraînée par les gaz d'échappement.

Le compresseur est disposé en amont du collecteur d'admission d'air du moteur et est apte à compresser l'air admis par le moteur. Le compresseur est entraîné par la turbine.

Dans le cas d'un système de suralimentation comprenant un turbocompresseur à géométrie fixe (TGF), la puissance fournie par les gaz d'échappement à la turbine peut être modulée au moyen d'une soupape de décharge apte à prélever une partie des gaz d'échappement en entrée de turbine. Dans le cas d'un système de suralimentation comprenant un turbocompresseur à géométrie variable (TGV), la puissance fournie par les gaz d'échappement à la turbine peut être modulée au moyen d'ailettes réglables en entrée de turbine.

A cet effet, un actionneur commandé par l'unité de commande électronique permet de piloter l'ouverture et la fermeture de la soupape ou des ailettes du turbocompresseur.

Actuellement, les exigences en terme de brio des moteurs diesel conduisent à imposer des contraintes de temps de réponse très courts des systèmes de suralimentation. Il s'ensuit que l'unité de contrôle électronique est programmée pour piloter le turbocompresseur en des points de fonctionnement approchant les limites de fonctionnement du turbocompresseur.

En particulier, dans certaines conditions, lorsque le conducteur du véhicule lève brutalement le pied de la pédale d'accélérateur, il se produit un phénomène de pompage qui se traduit par de fortes oscillations du débit d'air dans le collecteur d'admission du moteur. Ce phénomène de pompage est préjudiciable pour le fonctionnement du moteur et peut entraîner une détérioration du turbocompresseur. En outre, ce phénomène de pompage est désagréable pour le conducteur (apparition de bruits d'air, perte de puissance du moteur).

Le document DE 101 54 151 A1 décrit un procédé pour limiter le phénomène de pompage pendant une phase de baisse subite de l'injection. Le procédé comprend une étape consistant à détecter une variation de la commande d'accélération et une étape consistant à, en fonction de cette variation, maintenir le turbocompresseur à géométrie variable dans une configuration d'ouverture maximale. Le document US 2003/0116150 A1 décrit un Procédé pour régler un dispositif de recirculation pendant des phases transitoires.

Ce procédé ne permet pas de faire chuter le plus rapidement possible la pression en sortie du compresseur ni de maintenir le débit d'air entrant à l'admission car il est limité par le régime moteur.

En outre, l'efficacité de ce procédé dépend du réglage des paramètres de régulation du mode de fonctionnement régulé.

Un problème résolu par l'invention est de proposer un procédé permettant d'éviter l'apparition d'un phénomène de pompage pendant une phase de levée de pied.

Un autre problème résolu par l'invention est le maintien du débit d'air d'admission sur une levée de pied du conducteur.

Ce problème est résolu dans le cadre de la présente invention grâce à un procédé de commande d'un moteur à combustion interne comprenant un système de suralimentation incluant un turbocompresseur, un système de recirculation des gaz d'échappement incluant une vanne de recirculation et une unité de contrôle électronique apte à commander une configuration géométrique du turbocompresseur et de la vanne de recirculation des gaz d'échappement comprenant des étapes consistant à :
- alors que le système de suralimentation fonctionne selon un premier mode de fonctionnement régulé, détecter une variation d'une commande d'accélération du moteur,
- en fonction de la variation détectée, faire passer le système de suralimentation dans un mode de fonctionnement transitoire dans lequel le turbocompresseur est maintenu dans une configuration géométrique donnée pendant une durée prédéterminée,
- faire passer le système de suralimentation dans un deuxième mode de fonctionnement commandé.

Par l'expression « configuration géométrique », on entend dans le cadre de la présente invention une position de la vanne de recirculation des gaz ou une position de la soupape à décharge (dans le cas d'un turbocompresseur à géométrie fixe) ou encore une position des ailettes (dans le cas d'un turbocompresseur à géométrie variable).

Le procédé selon l'invention peut comporter une étape consistant en fonction de la variation détectée, faire passer le système de recirculation des gaz d'échappement dans un mode de fonctionnement transitoire (EGR_AS_SP).

Avec le procédé de l'invention, il est possible, dans le mode de fonctionnement transitoire, de commander la soupape à décharge ou la position des ailettes et la position de la vanne de recirculation des gaz d'échappement pour vidanger de manière rapide l'air dans le collecteur d'admission. En effet, l'ouverture des ailettes du turbocompresseur ou de la soupape de décharge provoque la chute rapide de la pression en amont de la turbine. La pression de suralimentation devient alors supérieur à la pression en amont de la turbine. Une différente de pression existe alors aux bornes de la vanne de recirculation des gaz d'échappement. L'ouverture de la vanne de recirculation des gaz brûlés provoque une vidange accélérée de l'air contenu dans le collecteur d'admission vers le circuit d'échappement. Dans ce cas de figure, la vanne de recirculation n'est plus utilisée pour recycler les gaz d'échappement mais renvoie de l'air frais directement dans le circuit d'échappement. Ceci à pour conséquence une vidange encore plus rapide du collecteur d'admission et un maintien du niveau du débit d'air plus élevé car le moteur à combustion interne est court-circuité.

L'efficacité du procédé de l'invention est indépendante du réglage des paramètres de régulation du mode de fonctionnement régulé. En effet, lors d'une levée de pied, les systèmes de suralimentation et de recirculation des gaz d'échappement passent chacun dans un mode de fonctionnement non régulé. C'est pourquoi, il n'est pas nécessaire d'adapter les paramètres de régulation pour accentuer l'ouverture des ailettes ou de la vanne de recirculation en vue d'améliorer l'efficacité de la vidange de l'air dans le collecteur d'admission.

Le procédé pourra en outre présenter les caractéristiques suivantes :
- durant le mode de fonctionnement transitoire, la position de la vanne de recirculation des gaz d'échappement est maintenue dans une configuration géométrique donnée pendant une durée prédéterminée ou est commandée en fonction d'un point de fonctionnement du moteur.
- l'étape de détection d'une variation d'une commande d'accélération du moteur comprend une étape consistant à comparer un débit de carburant injecté dans le moteur à un premier seuil et à déterminer si le débit de carburant injecté est inférieur au premier seuil,
- le premier seuil dépend du régime du moteur,
- la durée prédéterminée dépend du régime moteur,
- la durée prédéterminée dépend du taux de compression d'air par le turbocompresseur,
- dans le premier mode de fonctionnement régulé la configuration géométrique du turbocompresseur est commandée en fonction d'une comparaison entre un paramètre de pression mesurée d'air admis par le moteur et un paramètre de pression de consigne,
- dans le deuxième mode de fonctionnement commandé la configuration géométrique du turbocompresseur est commandée en fonction d'un point de fonctionnement du moteur,
- l'étape de détection d'une variation d'une commande d'accélération du moteur comprend une étape consistant à comparer un débit de carburant injecté dans le moteur à un deuxième seuil et à déterminer si le débit de carburant injecté est supérieur au deuxième seuil,
- le deuxième seuil est supérieur au premier seuil et dépend du régime moteur.

L'invention concerne également une unité de contrôle électronique destinée à commander le fonctionnement du moteur, programmée pour mettre en oeuvre le procédé qui précède.

D'autres caractéristiques et avantages ressortiront encore de la description qui suit, laquelle est purement illustrative et non limitative et doit être lue en regard des figures annexées, parmi lesquelles :
- la figure 1 représente de manière schématique un bloc de motorisation incluant un système de suralimentation et un système de recirculation des gaz d'échappement,
- la figure 2 est un schéma de principe du fonctionnement d'une unité de contrôle électronique apte à mettre en oeuvre un premier mode de réalisation du procédé de commande conforme à l'invention,
- la figure 3 représente de manière schématique différentes phases de commande du système de suralimentation lors d'une détection de levée de pied selon le premier mode de réalisation,
- la figure 4 représente de manière schématique un diagramme de champ compresseur,
- la figure 5 est un diagramme représentatif de l'évolution de paramètres de fonctionnement du système de suralimentation lors d'une détection de levée de pied et lorsque le premier mode de réalisation est mis en oeuvre
- la figure 6 est un schéma de principe du fonctionnement d'une unité de contrôle électronique apte à mettre en oeuvre un second mode de réalisation du procédé de commande conforme à l'invention,
- la figure 7 représente de manière schématique différentes phases de commande du système de suralimentation et du système de recirculation des gaz lors d'une détection de levée de pied selon le second mode de réalisation,
- la figure 8 représente de manière schématique un diagramme de champ compresseur,
- la figure 9 est un diagramme représentatif de l'évolution de paramètres de fonctionnement du système de suralimentation lors d'une détection de levée de pied et lorsque le second mode de réalisation est mis en oeuvre.

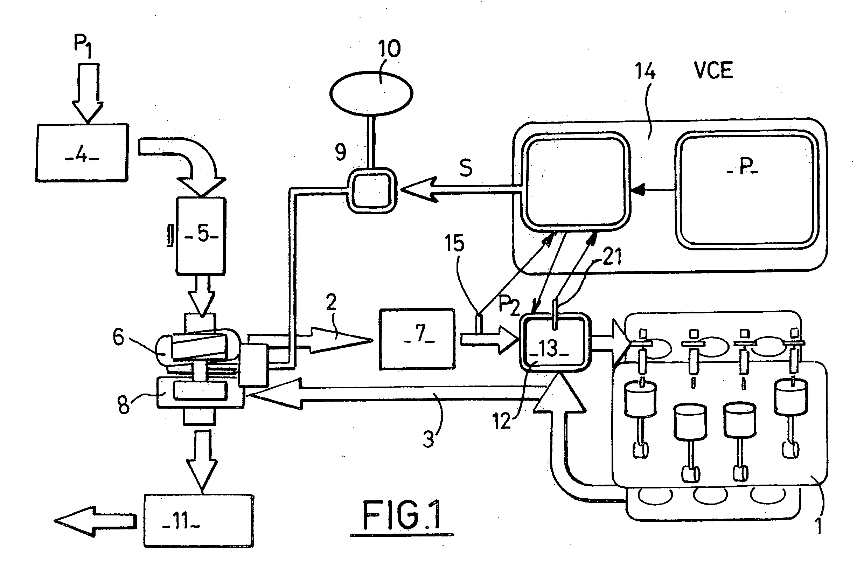

Sur la figure 1, le bloc de motorisation représenté comprend un moteur à combustion interne de type diesel 1 connecté d'une part à un circuit d'admission 2 destiné à alimenter le moteur 1 en air frais prélevé à l'extérieur du véhicule et d'autre part à un circuit d'échappement 3 destiné à évacuer les gaz d'échappement produits par le moteur.

Le circuit d'admission 2 comprend un filtre à air 4, un débitmètre 5 apte à mesurer le débit d'air frais admis dans le circuit d'admission 2, un compresseur 6 destiné à augmenter la pression de l'air frais admis et un échangeur 7 destiné à refroidir l'air en sortie du compresseur 6.

Le circuit d'échappement 3 comprend une turbine à géométrie variable entraînée 8 par les gaz d'échappement en sortie du moteur, une électrovanne 9 reliée à une pompe à vide 10 apte à modifier la position des ailettes de la turbine 8, un filtre à particule 11.

Le bloc de motorisation représenté comprend également un circuit de recirculation des gaz d'échappement (EGR) 12 destiné à injecter une partie des gaz d'échappement dans le circuit d'admission 2 du moteur 1. Le circuit de recirculation des gaz d'échappement 12 comprend une vanne 13 dont l'ouverture peut être commandée pour modifier la quantité de gaz d'échappement injectée dans le collecteur d'admission et un capteur de position 21 de ladite vanne.

Le bloc de motorisation comprend également une unité de contrôle électronique (UCE) 14 qui gère l'ensemble du fonctionnement du bloc motorisé. L'unité de contrôle électronique 14 est en particulier programmée pour commander l'électrovanne 9 pour piloter la position des ailettes de la turbine à géométrie variable 8, et pour commander la position de la vanne 13 de recirculation des gaz d'échappement.

L'unité de contrôle électronique 14 reçoit des données relatives au débit d'air frais (*Q_{af}*) admis en provenance du débitmètre 5, des données de pression (*P*2) en provenance d'un capteur de pression 15 disposé dans le collecteur d'admission du moteur, en amont de la vanne 13 du circuit de recirculation des gaz d'échappement et des données relatives à la position de la vanne de recirculation des gaz d'échappement en provenance du capteur de position 21.

Un premier mode de réalisation du procédé va maintenant être décrit.

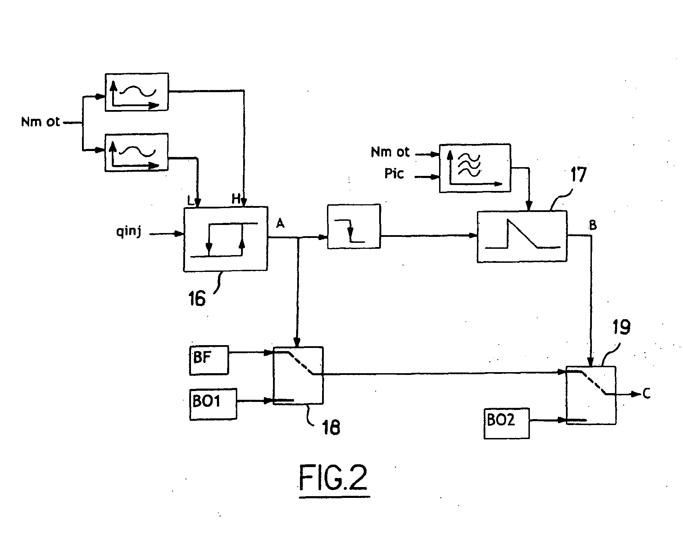

La figure 2 illustre le principe du fonctionnement de l'unité de contrôle électronique. La figure 2 représente un circuit de détermination de mode de fonctionnement.

Le circuit représenté comprend un détecteur de levée de pied 16, une temporisation 17, un premier commutateur 18 et un deuxième commutateur 19.

L'unité de contrôle électronique est apte à commander le système de suralimentation selon trois modes de fonctionnement possibles.

Selon un premier mode de fonctionnement appelé « mode de fonctionnement régulé » ou « asservi », l'unité de contrôle électronique transmet un signal de commande à l'électrovanne pour régler la position des ailettes de la turbine, le signal de commande étant dépendant d'une erreur entre la pression *P*2 d'air mesurée par le capteur de pression dans le collecteur d'admission et d'une valeur de pression de consigne *P*. Le premier mode de fonctionnement est un mode de fonctionnement en boucle fermée (noté *BF* sur la figure 2).

Selon un deuxième mode de fonctionnement appelé « mode de fonctionnement commandé », l'unité de contrôle électronique transmet un signal de commande à l'électrovanne pour régler la position des ailettes de la turbine, le signal de commande étant dépendant du point de fonctionnement du moteur (régime moteur *Nₘₒₜ*, couple moteur *Cₘₒₜ*). Le deuxième mode de fonctionnement est un mode de fonctionnement en boucle ouverte (noté *BO*1 sur la figure 2).

Selon un troisième mode de fonctionnement appelé « mode de fonctionnement transitoire », l'unité de contrôle électronique transmet une signal de commande à l'électrovanne pour positionner des ailettes de la turbine en une position fixe prédéterminée. Le troisième mode de fonctionnement est un mode de fonctionnement en boucle ouverte (noté *BO*2 sur la figure 2).

Le premier commutateur 18 est apte à faire passer l'unité de contrôle électronique du premier mode de fonctionnement *BF* au deuxième mode de fonctionnement *BO*1 et le deuxième commutateur 19 est apte à faire passer l'unité de commande électronique du mode de fonctionnement en sortie du premier commutateur 18 au troisième mode de fonctionnement *BO*2.

L'unité de contrôle électronique est programmée pour faire passer le système de suralimentation d'un mode de fonctionnement à un autre de la manière suivante.

Initialement, l'unité de contrôle électronique commande le système de suralimentation en mode de fonctionnement régulé *BF.*

Selon une première étape, l'unité de contrôle électronique détecte une variation d'une commande d'accélération du moteur. A cet effet, l'unité de contrôle électronique compare le débit brut de carburant injecté dans le moteur (*qᵢₙⱼ*) à un premier seuil bas (*L*) et à un deuxième seuil haut (*H*), le premier et le deuxième seuils dépendant du régime moteur (*Nₘₒₜ*).

Le détecteur de levée de pied 16 est représenté par une fonction à hystérésis recevant en entrée la variable de débit *qᵢₙⱼ* et générant en sortie un signal A prenant la valeur 0 ou 1.

Si *qᵢₙⱼ* diminue et devient inférieur au premier seuil *L* , alors le signal A prend la valeur 0.

Si *qᵢₙⱼ* augmente et devient supérieur au deuxième seuil *H* , alors le signal A prend la valeur 1.

Si l'unité de contrôle électronique détecte une levée de pied, l'unité de contrôle électronique réalise une deuxième étape.

Selon cette deuxième étape, l'unité de contrôle électronique déclenche la temporisation 17 et passe en mode de fonctionnement transitoire *BO*2 pendant une durée *T* prédéterminée.

La temporisation 17 reçoit en entrée le signal A et génère en sortie un signal *B*.

Lorsque le signal *A* s'annule, le signal *B* prend la valeur 1 puis décroît et s'annule au bout d'une durée *T* prédéterminée. La temporisation 17 est calibrable et la durée *T* dépend du régime moteur (*Nₘₒₜ*) et du taux de compression d'air (*P_{ic}*) par le turbocompresseur. Le taux de compression d'air *P_{ic}* est égal au rapport *P*2/*P*1*, P*2 étant la pression dans le collecteur d'admission du moteur et *P*1 étant la pression de l'air frais prélevé à l'extérieur du véhicule.

Lorsque le signal *B* vaut 1, le commutateur bascule du mode de fonctionnement de sortie du premier commutateur 18 au troisième mode de fonctionnement *BO*2.

Dans le mode de fonctionnement transitoire *BO*2, les ailettes de la turbine sont maintenues en une position fixe prédéterminée. Les ailettes sont par exemple maintenues dans une position d'ouverture maximale de manière à vidanger efficacement le collecteur d'admission du moteur. Ainsi le rapport de compression (*P_{ic}*) décroît rapidement et le turbocompresseur fonctionne hors de la zone de pompage.

D'autre part, lorsque le signal *A* prend la valeur 0, le premier commutateur 18 bascule du premier mode de fonctionnement *BF* au deuxième mode de fonctionnement *BO*1.

Lorsque la durée *T* s'est écoulée, l'unité de contrôle électronique réalise une troisième étape.

Selon une troisième étape, l'unité de contrôle électronique passe en mode de fonctionnement commandé *BO*1.

Le deuxième commutateur bascule du troisième mode de fonctionnement *BO*2 au deuxième mode de fonctionnement *BO*1.

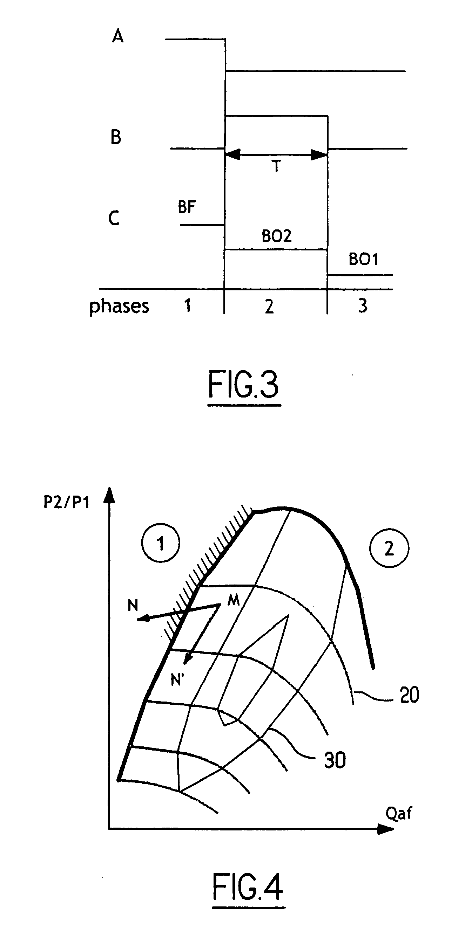

La figure 3 représente de manière schématique différentes phases de commande du système de suralimentation lors d'une détection de levée de pied.

Comme on peut le voir sur la figure 4, le système de suralimentation est initialement en mode de fonctionnement régulé (*BF*). Le signal *A* vaut 1 (Phase 1).

Lors d'une détection de levée de pied, le signal *A* s'annule. La temporisation est déclenchée et le signal *B* devient non nul. Le système de suralimentation passe en mode de fonctionnement transitoire (*BO*2).

Le système de suralimentation est maintenu en mode de fonctionnement transitoire pendant une durée *T* (Phase 2).

Lorsque la durée *T* s'est écoulée, le signal *B* s'annule et le système de suralimentation passe en mode de fonctionnement commandé (*BO*1) (Phase 3).

La figure 4 représente de manière schématique un diagramme de champ compresseur.

Sur ce diagramme, les courbes 20 sont des courbes iso-régime turbo et les courbes 30 sont des courbes iso-rendement. La zone (1) est une zone de pompage et la zone (2) est une zone de sur-vitesse.

Le diagramme a pour abscisse le débit d'air frais (*Q_{af}*) admis dans le collecteur du moteur et pour ordonnée le taux de compression (*P*2/*P*1) généré par le turbocompresseur.

Le point M représente un point de fonctionnement du moteur avant une levée de pied.

Le point N représente un point de fonctionnement du moteur immédiatement après une levée de pied, dans le cas des systèmes de suralimentation de l'art antérieur.

Le point N' représente un point de fonctionnement du moteur immédiatement après une levée de pied, dans le cas d'un système de suralimentation commandé selon le procédé de l'invention.

Comme on le voit sur la figure 4, dans l'art antérieur, l'action de refermer les ailettes lors d'une levée de pied maintient de taux de compression alors que le débit d'air dans le collecteur chute, de sorte que le point de fonctionnement du système de suralimentation passe en zone de pompage (point N).

Le procédé de commande de l'invention a pour effet que le taux de compression (*P*2/*P*1) diminue suffisamment rapidement pour que le système de suralimentation ne passe pas dans la zone de pompage (1).

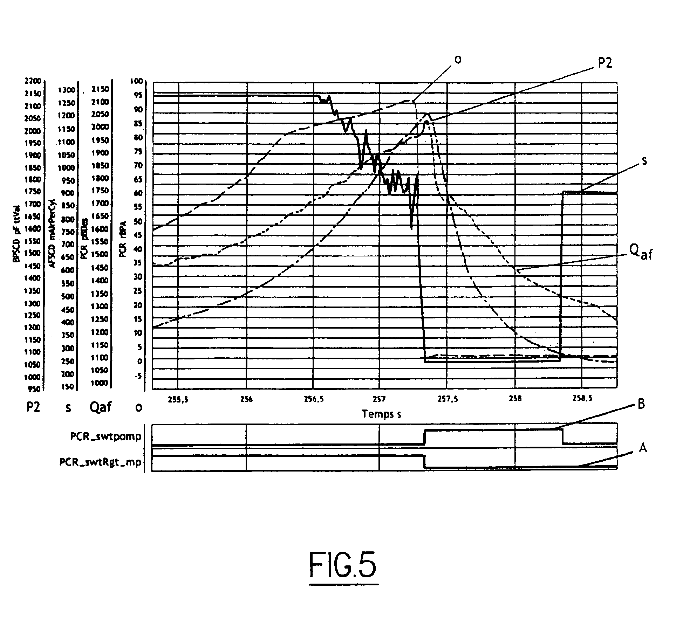

La figure 5 est un diagramme représentatif de l'évolution de paramètres de fonctionnement du système de suralimentation lors d'une détection de levée de pied.

Le diagramme représente l'évolution des paramètres suivants :
- pression *P*2 de suralimentation mesurée dans le collecteur d'admission du moteur (en hectopascal),
- débit *Q_{af}* d'air frais admis dans le moteur,
- signal *s* de commande de l'électrovanne pilotant l'ouverture et la fermeture des ailettes du turbocompresseur,
- l'ouverture *o* des ailettes de la turbine (en % de fermeture),
- signal *A* de détection d'une levée de pied,
- signal *B* de commande de commutation en mode de fonctionnement transitoire anti-pompage.

L'évolution des paramètres a été enregistrée pour une levée de pied intervenant lorsque le moteur se trouve en fonctionnement à pleine charge à un régime de 1750 tours par minute.

La levée de pied est détectée lorsque le signal *A* s'annule. Sur le front descendant du signal *A,* le mode de fonctionnement transitoire anti-pompage est activé.

A cet instant, le signal *B* passe à la valeur 1 indiquant le déclenchement de la temporisation.

Les ailettes du turbocompresseur sont maintenues en position d'ouverture maximale. Le signal de commande de l'électrovanne pilotant l'ouverture et la fermeture des ailettes du turbocompresseur est à 0 % pendant la phase transitoire.

On constate que le débit d'air frais admis et la pression de suralimentation chutent rapidement. La pression de suralimentation décroît de 800 hectopascal en 0,5 seconde.

En outre, le débit d'air est stable et ne présente pas d'oscillations, ce qui indique qu'aucun phénomène de pompage ne survient.

Le second mode de réalisation du procédé va maintenant être décrit.

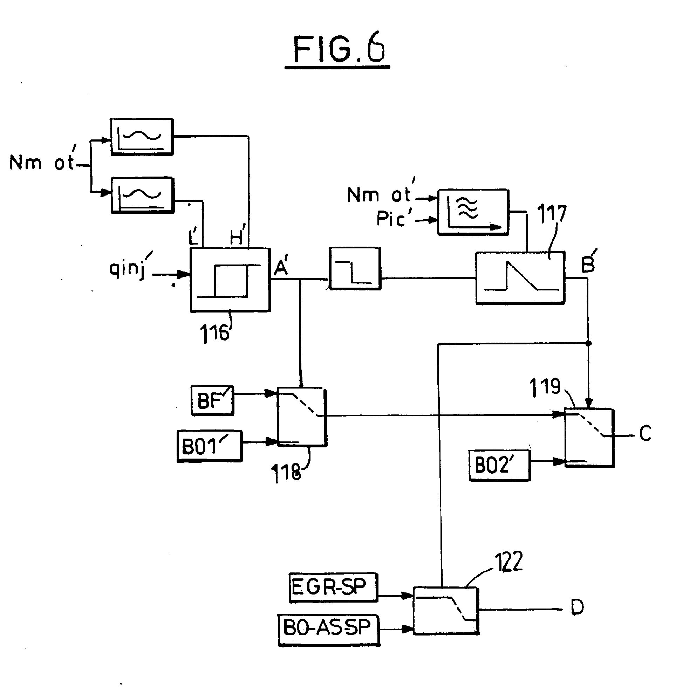

La figure 6 illustre le principe du fonctionnement de l'unité de contrôle électronique pour ce mode de réalisation. La figure 6 représente un circuit de détermination de mode de fonctionnement.

Le circuit représenté comprend un détecteur de levée de pied 116, une temporisation 117, un premier commutateur 118, un deuxième commutateur 119 et un troisième commutateur 122

Dans ce deuxième mode réalisation, l'unité de contrôle électronique est apte à commander le système de suralimentation selon trois modes de fonctionnement possibles.

Selon un premier mode de fonctionnement du système de suralimentation, appelé « mode de fonctionnement régulé » ou « asservi », l'unité de contrôle électronique transmet un signal de commande à l'électrovanne pour régler la position des ailettes de la turbine, le signal de commande étant dépendant d'une erreur entre la pression *P*2 d'air mesurée par le capteur de pression dans le collecteur d'admission et d'une valeur de pression de consigne *P*. Le premier mode de fonctionnement est un mode de fonctionnement en boucle fermée (noté *BF* sur la figure 2).

Selon un deuxième mode de fonctionnement du système de suralimentation, appelé « mode de fonctionnement commandé », l'unité de contrôle électronique transmet un signal de commande à l'électrovanne pour régler la position des ailettes de la turbine, le signal de commande étant dépendant du point de fonctionnement du moteur (régime moteur *Nₘₒₜ,* couple moteur *Cₘₒₜ*). Le deuxième mode de fonctionnement est un mode de fonctionnement en boucle ouverte (noté *BO*1 sur la figure 2).

Selon un troisième mode de fonctionnement du système de suralimentation, appelé « mode de fonctionnement transitoire », l'unité de contrôle électronique transmet une signal de commande à l'électrovanne pour positionner des ailettes de la turbine en une position fixe prédéterminée. Le troisième mode de fonctionnement est un mode de fonctionnement en boucle ouverte (noté *BO*2 sur la figure 2).

L'unité de contrôle électronique est en outre apte à commander le système de récirculation des gaz d'échappement selon deux modes de fonctionnement.

Selon le premier mode de fonctionnement du système de recirculation, la position de la vanne de recirculation des gaz d'échappement est calculée en fonction de la stratégie de régulation implantée dans l'unité de contrôle électronique. Le premier mode de fonctionnement est un mode de fonctionnement en boucle fermée (noté EGR_SP sur la figure 6).

Selon un autre mode de fonctionnement du système de recirculation des gaz, l'unité de contrôle électronique transmet un signal de commande constant à la vanne 13 de recirculation des gaz pour lui donner une position fixe prédéterminée quelque soit le point de fonctionnement du moteur. Le deuxième mode de fonctionnement est un mode de fonctionnement en boucle ouverte (noté BO_AS_SP sur la figure 6).

Le premier commutateur 118 est apte à faire passer l'unité de contrôle électronique du premier mode de fonctionnement *BF* au deuxième mode de fonctionnement *BO*1 et le deuxième commutateur 119 est apte à faire passer l'unité de commande électronique du mode de fonctionnement en sortie du premier commutateur 118 au troisième mode de fonctionnement *BO*2.

Le troisième commutateur 122 est apte à faire passer l'unité de contrôle électronique du premier mode de fonctionnement EGR_SP au deuxième mode de fonctionnement BO_AS_SP.

L'unité de contrôle électronique est programmée pour faire passer le système de suralimentation et le système de recirculation des gaz d'un mode de fonctionnement à un autre de la manière suivante.

Initialement, l'unité de contrôle électronique commande le système de suralimentation en mode de fonctionnement régulé *BF* et le système de recirculation des gaz en mode régulé EGR_SP.

Selon une première étape, l'unité de contrôle électronique détecte une variation d'une commande d'accélération du moteur. A cet effet, l'unité de contrôle électronique compare le débit brut de carburant injecté dans le moteur (*qᵢₙⱼ'*) à un premier seuil bas (*L'*) et à un deuxième seuil haut (*H'*), le premier et le deuxième seuils dépendant du régime moteur (*Nₘₒₜ*').

Le détecteur de levée de pied 116 est représenté par une fonction à hystérésis recevant en entrée la variable de débit *qᵢₙⱼ*' et générant en sortie un signal A' prenant la valeur 0 ou 1.

Si *qᵢₙⱼ*' diminue et devient inférieur au premier seuil *L'*, alors le signal A' prend la valeur 0.

Si *qᵢₙⱼ* augmente et devient supérieur au deuxième seuil *H*', alors le signal *A*' prend la valeur 1.

Si l'unité de contrôle électronique détecte une levée de pied, l'unité de contrôle électronique réalise une deuxième étape.

Selon cette deuxième étape, l'unité de contrôle électronique déclenche la temporisation 117 et passe en mode de fonctionnement transitoire *BO*2' pour le système de suralimentation et en mode de fonctionnement BO_AS_SP pour le système de recirculation pendant une durée T' prédéterminée.

La temporisation 117 reçoit en entrée le signal *A'* et génère en sortie un signal *B*'.

Lorsque le signal *A'* s'annule, le signal *B'* prend la valeur 1 puis décroît et s'annule au bout d'une durée *T*' prédéterminée. La temporisation 117 est calibrable et la durée *T*' dépend du régime moteur (*Nₘₒₜ'*) et du taux de compression d'air (*P_{ic}'*) par le turbocompresseur au moment du levé de pied. Le taux de compression d'air *P_{ic}*' est égal au rapport *P*2/*P*1, *P*2 étant la pression dans le collecteur d'admission du moteur et *P*1 étant la pression de l'air frais prélevé à l'extérieur du véhicule.

Lorsque le signal *B'* vaut 1, le commutateur 119 bascule du mode de fonctionnement de sortie du premier commutateur 118 au troisième mode de fonctionnement *BO*2' et le troisième commutateur 122 bascule du mode de fonctionnement EGR_SP au mode de fonctionnement BO_AS_SP.

Dans le mode de fonctionnement transitoire *BO*2', les ailettes de la turbine et la vanne de recirculation sont maintenues en une position fixe prédéterminée. Les ailettes et la vanne de recirculation sont par exemple maintenues dans une position d'ouverture maximale de manière à vidanger efficacement le collecteur d'admission du moteur. Ainsi le rapport de compression (*P_{ic}*') décroît rapidement et le turbocompresseur fonctionne hors de la zone de pompage.

D'autre part, lorsque le signal *A'* prend la valeur 0, le premier commutateur 118 bascule du premier mode de fonctionnement *BF'* au deuxième mode de fonctionnement *BO*1'.

Lorsque la durée *T'* s'est écoulée, l'unité de contrôle électronique réalise une troisième étape.

Selon une troisième étape, l'unité de contrôle électronique passe en mode de fonctionnement commandé *BO*1'.

Le deuxième commutateur 119 bascule du troisième mode de fonctionnement *BO*2' au deuxième mode de fonctionnement *BO*1' et le troisième commutateur retrouve sa position initiale EGR_SP.

La figure 6 représente de manière schématique différentes phases de commande du système de suralimentation lors d'une détection de levée de pied.

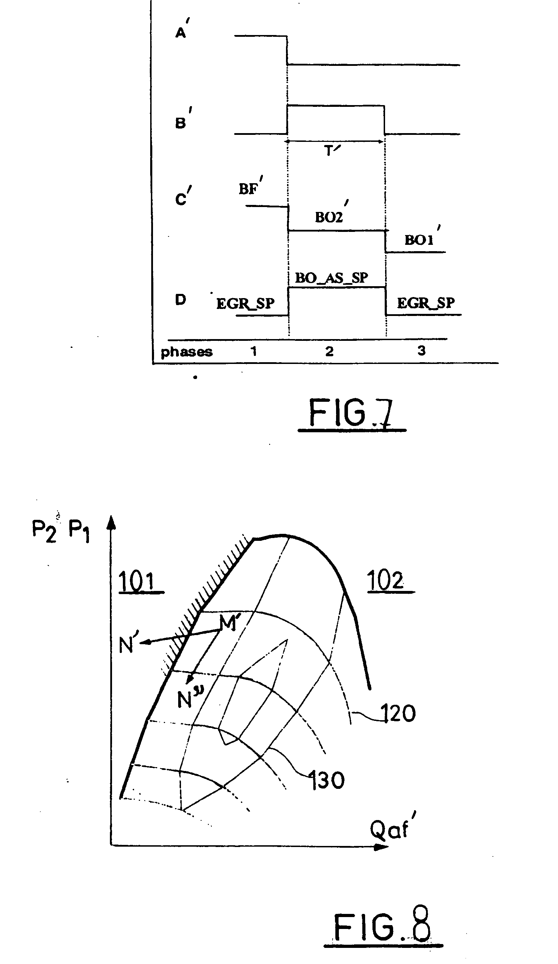

Comme on peut le voir sur la figure 7, le système de suralimentation est initialement en mode de fonctionnement régulé (*BF*'). Le signal *A'* vaut 1 (Phase 1).

Lors d'une détection de levée de pied, le signal *A'* s'annule. La temporisation est déclenchée et le signal *B'* devient non nul. Le système de suralimentation passe en mode de fonctionnement transitoire (*BO*2') et le système de recirculation des gaz d'échappement passe en mode de fonctionnement transitoire (BO_AS_SP).

Le système de suralimentation et le système de recirculation sont maintenus en mode de fonctionnement transitoire pendant une durée *T'* (Phase 2).

Lorsque la durée *T'* s'est écoulée, le signal *B'* s'annule et le système de suralimentation passe en mode de fonctionnement commandé (*BO*1') (Phase 3) tandis que le système de recirculation repasse en mode de fonctionnement normal (EGR_SP).

La figure 8 représente de manière schématique un diagramme de champ compresseur.

Sur ce diagramme, les courbes 120 sont des courbes iso-régime turbo et les courbes 130 sont des courbes iso-rendement. La zone (101) est une zone de pompage et la zone (102) est une zone de sur-vitesse.

Le diagramme a pour abscisse le débit d'air frais (*Q_{af}'*) admis dans le collecteur du moteur et pour ordonnée le taux de compression (*P*2/*P*1) généré par le turbocompresseur.

Le point M' représente un point de fonctionnement du moteur avant une levée de pied.

Le point N' représente un point de fonctionnement du moteur immédiatement après une levée de pied, dans le cas des systèmes de suralimentation de l'art antérieur.

Le point N" représente un point de fonctionnement du moteur immédiatement après une levée de pied, dans le cas d'un système de suralimentation commandé selon le procédé de l'invention.

Comme on le voit sur la figure 8, dans l'art antérieur, l'action de refermer les ailettes lors d'une levée de pied maintient le taux de compression alors que le débit d'air dans le collecteur chute, de sorte que le point de fonctionnement du système de suralimentation passe en zone de pompage (point N').

Le procédé de commande de l'invention,dans ce mode de réalisation, a pour effet que le taux de compression (*P*2/*P*1) diminue suffisamment rapidement pour que le système de suralimentation ne passe pas dans la zone de pompage (1).

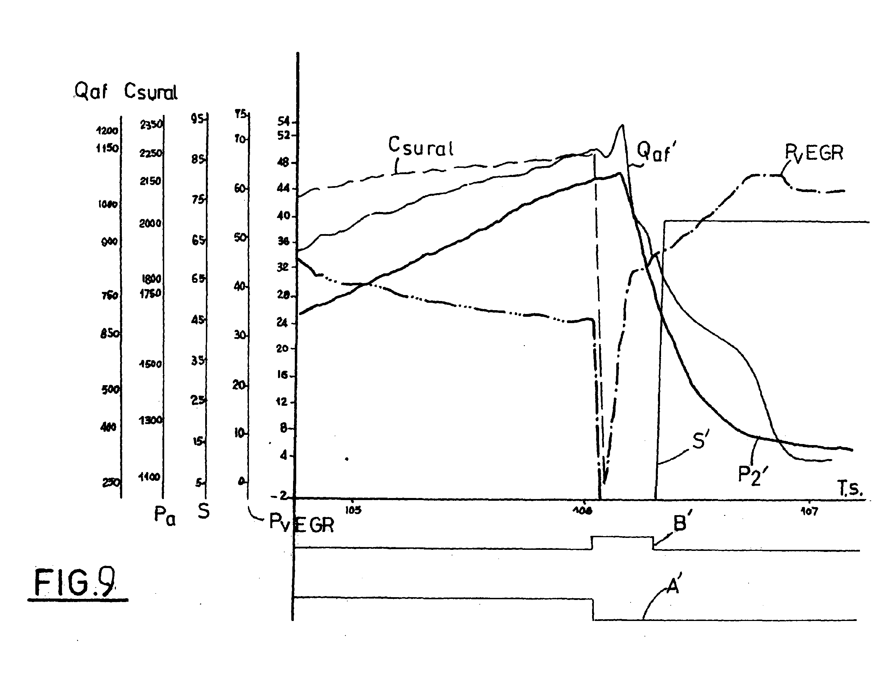

La figure 9 est un diagramme représentatif de l'évolution de paramètres de fonctionnement du système de suralimentation lors d'une détection de levée de pied.

Le diagramme représente l'évolution des paramètres suivants :
- pression *P*2' de suralimentation mesurée dans le collecteur d'admission du moteur (en hectopascal),
- débit *Q_{af}'* d'air frais admis dans le moteur ,
- signal *s'* de commande de l'électrovanne pilotant l'ouverture et la fermeture des ailettes du turbocompresseur.
- consigne *Csural* de pression de suralimentation
- position *P_{vEGR}* de la vanne de recirculation des gaz (en pourcentage d'ouverture)
- signal A' de détection de levée d'une levée de pied.
- signal *B'* de commande de commutation en mode de fonctionnement transitoire anti-pompage .

L'évolution des paramètres a été enregistrée pour une levée de pied intervenant lorsque le moteur se trouve en fonctionnement à pleine charge à un régime de 1650 tours par minute.

La levée de pied est détectée lorsque le signal A' s'annule. Sur le front descendant du signal *A*', le mode de fonctionnement transitoire anti-pompage est activé.

Lorsque le signal *B'* passe à la valeur 1 indiquant le déclenchement de la temporisation, les ailettes du turbocompresseur sont maintenues en position d'ouverture maximale. Le signal de commande de l'électrovanne pilotant l'ouverture et la fermeture des ailettes du turbocompresseur est à 0 % pendant la phase transitoire. La vanne de recirculation des gaz d'échappement est également maintenue dans une position d'ouverture maximale.

On constate que le débit d'air frais admis et la pression de suralimentation chutent rapidement.

En outre, le débit d'air est stable et ne présente pas d'oscillations, ce qui indique qu'aucun phénomène de pompage ne survient.

Une variante de la stratégie de pilotage du système de recirculation des gaz pourra avoir un dispositif de détection de levée de pied spécifique, avec sa propre durée d'activation et une ouverture de la vanne de recirculation de gaz d'échappement dépendante du point de fonctionnement du moteur (régime moteur, pression de suralimentation, pression en amont de la turbine).

En outre, l'étape de détection d'une variation d'une commande d'accélération du moteur pourra être réalisée directement à partir de la position de la pédale d'accélération.

## Revendications

1. Procédé de commande d'un moteur (1) à combustion interne comprenant un système de suralimentation incluant un turbocompresseur (6, 8),un système de recirculation des gaz d'échappement (12) incluant une vanne de recirculation (13) et une unité de contrôle électronique (14) apte à commander une configuration géométrique du turbocompresseur (6, 8) et de la vanne du système de recirculation (13), **caractérisé en ce qu'**il comprend des étapes consistant à :
- alors que le système de suralimentation fonctionne selon un premier mode de fonctionnement régulé (*BF,BF'*), détecter une variation d'une commande d'accélération du moteur (1),
- en fonction de la variation détectée, faire passer le système de suralimentation dans un mode de fonctionnement transitoire (*BO*2,*BO*2') dans lequel le turbocompresseur (6, 8) est maintenu dans une configuration géométrique donnée pendant une durée prédéterminée (*T,T'*),
- faire passer le système de suralimentation dans un deuxième mode de fonctionnement commandé (*BO*1*,BO*1').

2. Procédé de commande selon la revendication 1 **caractérisé en ce qu'**il comprend une étape consistant à en fonction de la variation détectée, faire passer le système de recirculation (12) des gaz d'échappement dans un mode de fonctionnement transitoire (EGR_AS_SP).

3. Procédé de commande selon la revendication 2 **caractérisé en ce que** durant le mode de fonctionnement transitoire la vanne de recirculation (13) est maintenue dans une configuration géométrique donnée pendant une durée prédéterminée.

4. Procédé de commande selon la revendication 2 **caractérisé en ce que** durant le mode de fonctionnement transitoire la configuration géométrique de la vanne de recirculation (13) des gaz d'échappement est commandée en fonction d'un point de fonctionnement du moteur (1).

5. Procédé selon l'une quelconque des revendications 1 à 4, dans lequel l'étape de détection d'une variation d'une commande d'accélération du moteur (1) comprend une étape consistant à comparer un débit de carburant injecté (*qᵢₙⱼ,qᵢₙⱼ'*) dans le moteur (1) à un premier seuil (*L,L'*) et à déterminer si le débit de carburant injecté (*qᵢₙⱼ,qᵢₙⱼ'*) est inférieur au premier seuil (*L, L'*).

6. Procédé selon la revendication 5, dans lequel le premier seuil (*L,L'*) dépend du régime du moteur (*Nₘₒₜ,Nₘₒₜ'*).

7. Procédé selon l'une des revendications 1 à 5, dans lequel la durée prédéterminée (*T,T*') dépend du régime moteur (*Nₘₒₜ,Nₘₒₜ*').

8. Procédé selon l'une des revendications 1 à 6, dans lequel la durée prédéterminée (*T,T'*) dépend du taux de compression (*P_{ic}*, *P_{ic}*') d'air par le turbocompresseur (6, 8).

9. Procédé selon l'une des revendications 1 à 8,**caractérisé en ce que** dans le premier mode de fonctionnement régulé (*BF,BF*'), la configuration géométrique du turbocompresseur (6, 8) est commandée en fonction d'une comparaison entre un paramètre de pression mesurée (*P*2, *P*2') d'air admis par le moteur (1) et un paramètre de pression de consigne (*P,P'*) et **en ce que** dans le deuxième mode de fonctionnement commandé (*BO*1,*BO*1'),la configuration géométrique du turbocompresseur (6, 8) est commandée en fonction d'un point de fonctionnement ((*Nₘₒₜ*, *Cₘₒₜ*),(*Nₘₒₜ*',*Cₘₒₜ*')) du moteur (1).

10. Procédé selon la revendication 9, dans lequel l'étape de détection d'une variation d'une commande d'accélération du moteur (1) comprend une étape consistant à comparer un débit de carburant injecté (*qᵢₙⱼ*,*qᵢₙⱼ*') dans le moteur (1) à un deuxième seuil (*H,H'*) et à déterminer si le débit de carburant injecté (*qᵢₙⱼ,qᵢₙⱼ'*) est supérieur au deuxième seuil (*H,H'*).

11. Procédé selon la revendication 10, dans lequel le deuxième seuil (*H,H'*) dépend du régime moteur (*Nₘₒₜ*,*Nₘₒₜ'*).

12. Unité de contrôle électronique (14), **caractérisée en ce qu'**elle est programmée pour mettre en oeuvre le procédé selon l'une des revendications 1 à 11.

## Claims

1. Method of controlling an internal combustion engine (1) comprising a supercharging system including a turbocompressor (6, 8), an exhaust gas recirculation system (12) including a recirculation valve (13) and an electronic control unit (14) able to control a geometric configuration of the turbocompressor (6, 8) and of the valve of the recirculation system (13), **characterized in that** it comprises steps consisting in:
- while the supercharging system is operating according to a first regulated operating mode (*BF, BF'*), detecting a variation in an engine acceleration command (1),
- as a function of the detected variation, toggling the supercharging system into a transient operating mode (*BO2, BO2*') in which the turbocompressor (6,8) is maintained in a given geometric configuration for a predetermined duration (*T, T'*),
- toggling the supercharging system into a second controlled operating mode (*BO1*, *BO1*').

2. Control method according to Claim 1 **characterized in that** it comprises a step consisting in as a function of the detected variation, toggling the recirculation system (12) of the exhaust gases into a transient operating mode (EGR_AS_SP).

3. Control method according to Claim 2 **characterized in that** during the transient operating mode the recirculation valve (13) is maintained in a given geometric configuration for a predetermined duration.

4. Control method according to Claim 2 **characterized in that** during the transient operating mode the geometric configuration of the exhaust gases recirculation valve (13) is controlled as a function of an operating point of the engine (1).

5. Method according to any one of Claims 1 to 4, in which the step of detecting a variation in an engine acceleration command (1) comprises a step consisting in comparing a fuel flow rate (*qᵢₙⱼ, qᵢₙⱼ*') injected into the engine (1) with a first threshold (*L, L'*) and in determining whether the injected fuel flow rate (*qᵢₙⱼ, qᵢₙⱼ*') is less than the first threshold (*L, L'*).

6. Method according to Claim 5, in which the first threshold (L, L') depends on the speed of the engine (*Nₘₒₜ, Nₘₒₜ*').

7. Method according to one of Claims 1 to 5, in which the predetermined duration (*T, T'*) depends on the engine speed (*Nₘₒₜ*, *Nₘₒₜ'*).

8. Method according to one of Claims 1 to 6, in which the predetermined duration (*T, T'*) depends on the rate of compression (*P_{ic}*, *P_{ic}*') of air by the turbocompressor (6, 8).

9. Method according to one of Claims 1 to 8, **characterized in that** in the first regulated operating mode (*BF, BF'*), the geometric configuration of the turbocompressor (6, 8) is controlled as a function of a comparison between a parameter of measured pressure (*P2,P2'*) of air admitted by the engine (1) and a setpoint pressure parameter (*P, P'*), and **in that** in the second controlled operating mode (*BO1, BO1*'), the geometric configuration of the turbocompressor (6, 8) is controlled as a function of an operating point ((*Nₘₒₜ, Cₘₒₜ*),(*Nₘₒₜ*', *Cₘₒₜ*')) of the engine (1).

10. Method according to Claim 9, in which the step of detecting a variation in an engine acceleration command (1) comprises a step consisting in comparing a fuel flow rate (*q_{ing}, qᵢₙⱼ*') injected into the engine (1) with a second threshold (*H, H'*) and in determining whether the injected fuel flow rate (*qᵢₙⱼ, qᵢₙⱼ*') is greater than the second threshold (*H, H'*).

11. Method according to Claim 10, in which the second threshold (*H, H*') depends on the engine speed (*Nₘₒₜ*, *Nₘₒₜ*').

12. Electronic control unit (14), **characterized in that** it is programmed to implement the method according to one of Claims 1 to 11.

## Patentansprüche

1. Verfahren zur Steuerung eines Verbrennungsmotors (1), der ein Turboladesystem, das einen Turbolader (6, 8) umfasst, ein Abgas-Rückführungssystem (12), das ein Rückführungsventil (13) umfasst, und eine elektronische Kontrolleinheit (14) enthält, die eine geometrische Konfiguration des Turboladers (6, 8) und des Ventils (13) des Rückführungssystems steuern kann, **dadurch gekennzeichnet, dass** es Schritte enthält, die darin bestehen:
- wenn das Turboladesystem gemäß einer ersten, geregelten Betriebsart (BF, BF') arbeitet, eine Veränderung einer Beschleunigungssteuerung des Motors (1) zu erfassen,
- das Turboladesystem in Abhängigkeit von der erfassten Veränderung in eine Übergangsbetriebsart (B02, BO2') übergehen zu lassen, in der der Turbolader (6, 8) während einer vorbestimmten Zeitdauer (T, T') in einer gegebenen geometrischen Konfiguration gehalten wird,
- das Turboladesystem in eine zweite, gesteuerte Betriebsart (BO1, BO1') übergehen zu lassen.

2. Steuerungsverfahren nach Anspruch 1, **dadurch gekennzeichnet, dass** es einen Schritt enthält, der darin besteht, das Abgas-Rückführungssystem (12) in Abhängigkeit von der erfassten Veränderung in eine Übergangsbetriebsart (EGR_AS_SP) übergehen zu lassen.

3. Steuerungsverfahren nach Anspruch 2, **dadurch gekennzeichnet, dass** das Rückführungsventil (13) während der Übergangsbetriebsart während einer vorbestimmten Zeitdauer in einer gegebenen geometrischen Konfiguration gehalten wird.

4. Steuerungsverfahren nach Anspruch 2, **dadurch gekennzeichnet, dass** die geometrische Konfiguration des Abgas-Rückführungsventils (13) während der Übergangsbetriebsart in Abhängigkeit von einem Betriebspunkt des Motors (1) gesteuert wird.

5. Verfahren nach einem der Ansprüche 1 bis 4, bei dem der Schritt der Erfassung einer Veränderung einer Beschleunigungssteuerung des Motors (1) einen Schritt enthält, der darin besteht, einen Durchsatz von in den Motor (1) eingespritztem Kraftstoff (qᵢₙⱼ, qᵢₙⱼ') mit einer ersten Schwelle (L, L') zu vergleichen und festzustellen, ob der eingespritzte Kraftstoffdurchsatz (qᵢₙⱼ, qᵢₙⱼ') unter der ersten Schwelle (L, L') liegt.

6. Verfahren nach Anspruch 5, bei dem die erste Schwelle (L, L') von der Drehzahl des Motors (Nₘₒₜ, Nₘₒₜ') abhängt.

7. Verfahren nach einem der Ansprüche 1 bis 5, bei dem die vorbestimmte Zeitdauer (T, T') von der Motordrehzahl (Nₘₒₜ, Nₘₒₜ') abhängt.

8. Verfahren nach einem der Ansprüche 1 bis 6, bei dem die vorbestimmte Zeitdauer (T, T') vom Verdichtungsgrad (P_{ic}, P_{ic}') der Luft durch den Turbolader (6, 8) abhängt.

9. Verfahren nach einem der Ansprüche 1 bis 8, **dadurch gekennzeichnet, dass** in der ersten, geregelten Betriebsart (BF, BF') die geometrische Konfiguration des Turboladers (6, 8) in Abhängigkeit von einem Vergleich zwischen einem gemessenen Druckparameter (P2, P2') der vom Motor (1) angesaugten Luft und einem Solldruck-Parameter (P, P') gesteuert wird, und dass in der zweiten, gesteuerten Betriebsart (BO1, BO1') die geometrische Konfiguration des Turboladers (6, 8) in Abhängigkeit von einem Betriebspunkt ((Nₘₒₜ, Cₘₒₜ), (Nₘₒₜ', Cₘₒₜ')) des Motors (1) gesteuert wird.

10. Verfahren nach Anspruch 9, bei dem der Schritt der Erfassung einer Veränderung einer Beschleunigungssteuerung des Motors (1) einen Schritt enthält, der darin besteht, einen Durchsatz von in den Motor (1) eingespritztem Kraftstoff (qᵢₙⱼ, qᵢₙⱼ') mit einer zweiten Schwelle (H, H') zu vergleichen und festzustellen, ob der eingespritzte Kraftstoffdurchsatz (qᵢₙⱼ, qᵢₙⱼ') über der zweiten Schwelle (H, H') liegt.

11. Verfahren nach Anspruch 10, bei dem die zweite Schwelle (H, H') von der Motordrehzahl (Nₘₒₜ, Nₘₒₜ') abhängt.

12. Elektronische Kontrolleinheit (14), **dadurch gekennzeichnet, dass** sie programmiert ist, um das Verfahren nach einem der Ansprüche 1 bis 11 durchzuführen.
